# FASCICULE DE BREVET EUROPEEN

(11) **EP 2 395 885 B1**
(45) Date de publication et mention de la délivrance du brevet: **02.05.2018**
(21) Numéro de dépôt: 10710631.2
(22) Date de dépôt: 11.02.2010
(51) Int. Cl.: B65D 65/46, A47J 31/36

(54) **DISPOSITIF POUR LA PRÉPARATION D'UNE BOISSON EXTRAITE À PARTIR D'UNE CAPSULE**
VORRICHTUNG ZUR ZUBEREITUNG EINES GETRÄNKS AUS EINER KAPSEL
DEVICE FOR PREPARING A BEVERAGE EXTRACTED FROM A CAPSULE

(30) Priorité: 11.02.2009 WO PCT/IB2009/050564; 18.02.2009 WO PCT/IB2009/050663; 15.07.2009 WO PCT/IB2009/053070; 23.07.2009 WO PCT/IB2009/053205; 28.08.2009 WO PCT/IB2009/053777
(43) Date de publication de la demande: 21.12.2011
(73) Titulaire: Ethical Coffee Company SA, 1700 Fribourg (CH)
(72) Inventeur: MARILLER, Alain, CH-1801 Le Mont-Pèlerin (CH); GAILLARD, Jean-Paul, CH-1096 Cully (CH)
(74) Mandataire: August Debouzy
(86) Numéro de dépôt international: PCT/IB2010/050632
(87) Numéro de publication internationale: WO 2010/092543

(56) Documents cités:
- EP-A1- 1 295 554
- EP-A1- 1 500 357
- US-A1- 2003 056 661

## Description

### Domaine de l'invention

La présente invention se situe dans le domaine de la préparation de boissons, p.ex. à base de café, par extraction d'une dose concentrée, p.ex. de café moulu, contenue dans une capsule. Elle se rapporte plus particulièrement aux dispositifs utilisant de telles capsules.

### Etat de la technique

Des capsules et des machines fonctionnant selon le principe précité existent depuis de nombreuses décennies.

Les brevets US 2 899 886, US 2 968 560, US 3 403 617 et US 3 607 297 décrivent des dispositifs où la capsule est initialement perforée en plusieurs endroits, puis traversée par de l'eau sous pression.

La capsule décrite dans le brevet CH 605 293 ou dans le brevet EP 0 242 556 B1 comporte une membrane dans sa partie inférieure. De l'eau sous pression est initialement introduite dans la partie supérieure de la capsule, ce qui entraîne un gonflement de la capsule, principalement au niveau de la membrane. A partir d'une certaine pression, la membrane se déchire, autorisant de la sorte l'écoulement d'un mélange eau-café.

D'autres capsules munies d'une membrane sont décrites dans les documents brevets suivants : EP 0 468 079 A, EP 0 806 373 A, EP 0 554 469 A.

Un dispositif pour la préparation d'une boisson extraite à partir d'une capsule telle que décrite précédemment comprend un support de capsule et une cage à capsule, au moins une entrée d'eau, des moyens de perçage de capsule et une sortie de boisson.

Lorsque de l'eau chaude traverse la capsule, il existe un différentiel relativement important de température entre la paroi de la cage qui entoure la capsule et le contenu disposé à l'intérieur de la capsule.
Le contenu de la capsule subit donc une baisse de température qui est préjudiciable à la qualité du café.

### Exposé général de l'invention

Un premier objectif de la présente invention vise à inciter le consommateur à n'utiliser que des capsules dont l'impact environnemental est minimisé.

Un deuxième objectif vise à inciter le consommateur à n'utiliser que des capsules constituées d'un matériau souple, càd apte à subir une déformation plastique ou élastique. Ce type de capsule est en effet mieux adapté à certains dispositifs, en particulier en ce qui concerne l'étanchéité qui doit être garantie à l'intérieur de la cage de capsule.

Un troisième objectif vise à éviter l'utilisation de capsules constituées d'un matériau déformable au contact d'eau chaude. Ce type de matériau peut en effet induire des disfonctionnements dans certains dispositifs.

Un quatrième objectif consiste à proposer un système détectant si la capsule utilisée dans la cage à capsule est en métal ou toute autre matière conductrice d'électricité, ou plus généralement d'un type compatible pour le dispositif d'extraction considéré.

Un cinquième objectif vise à améliorer la qualité du café obtenu par extraction d'une dose concentrée.

La présente invention tire notamment profit du fait que les capsules écologiquement acceptables, p.ex. en matériau biodégradable, sont souvent moins rigides que les capsules réalisées avec des matériaux moins écologiques.

L'invention concerne donc un dispositif pour la préparation d'une boisson extraite à partir d'une capsule comprenant un support de capsule et une cage à capsule à l'intérieur de laquelle sont disposés au moins une entrée d'eau et des moyens de perçage de capsule. Le dispositif selon l'invention se caractérise par le fait qu'il comporte en outre des moyens d'interaction destinés à impartir un facteur mécanique, thermique, électrique ou électromagnétique à ladite capsule lorsque celle-ci est introduite dans la cage.

Selon un premier mode de réalisation les moyens de perçage sont adaptés pour percer uniquement des capsules dont le coefficient de résistance au perçage est inférieur à une valeur Rₚ.

Rₚ dépend principalement du type de matériau et dans une moindre mesure de l'épaisseur de la paroi de capsule. Ce coefficient est choisi de manière à autoriser le percement de capsules réalisées en matériau biodégradable et empêcher le percement de matériaux moins écologiques tels que du métal ou certains plastiques.

Selon un autre mode de réalisation de l'invention, les moyens de perçage sont adaptés de manière à se casser lorsqu'ils interagissent avec une capsule de coefficient de résistance supérieur à Rₚ.

Selon un autre mode de réalisation, les moyens de perçage sont adaptés de manière à se plier lorsqu'ils interagissent avec une capsule de coefficient de résistance supérieur à Rₚ.

Selon un autre mode de réalisation, les moyens de perçage sont adaptés de manière à se rétracter, p.ex. au moyen d'un ressort, lorsqu'ils interagissent avec une capsule de coefficient de résistance supérieur à Rₚ.

Selon un autre mode de réalisation, les moyens de perçage sont adaptés de manière à déformer la capsule préalablement à son perçage, afin que la capsule puisse être percée.

L'invention concerne également un ensemble constitué d'une capsule et d'un dispositif pour la préparation d'une boisson extraite à partir d'une capsule, ledit dispositif comprenant une cage dans laquelle se trouve un logement destiné à contenir une capsule, le volume du logement étant inférieur à celui de la capsule.

L'invention a également comme objet un dispositif pour la préparation d'une boisson extraite à partir d'une capsule comprenant un support de capsule et une cage à capsule à l'intérieur de laquelle sont disposés au moins une entrée d'eau et des moyens de perçage de capsule, caractérisé par le fait que le support de capsule et/ou la cage de capsule sont dimensionnés de manière à déformer au moins partiellement toute capsule disposée dans l'ensemble support-cage lorsque ce dernier est fermé.

Selon un mode de réalisation de l'invention, le dispositif comporte des moyens de déformation de capsule disposés dans la zone de contact du support avec la cage.

Avantageusement, ces moyens sont dimensionnés de manière à induire une déformation de la collerette de la capsule. Dans ce cas, les moyens peuvent avoir la forme d'une marche d'escalier.

Alternativement ou en outre, le dispositif comprend des moyens de déformation de capsule disposés sur la face interne de la cage.

Selon un mode de réalisation de cette variante, l'espace interne de la cage a un volume inférieur à celui de la capsule.
La diminution du volume interne de la cage peut être réalisée en lui définissant une hauteur inférieure à la hauteur de la capsule.
Alternativement ou en outre, l'inclinaison des parois latérales de la cage est supérieure à l'inclinaison des parois latérales de la capsule.

Selon un autre mode de réalisation de l'invention, la base de l'entrée d'eau fait partie intégrante du support.

L'invention permet également de détecter si la capsule utilisée dans la cage à capsule est en métal ou toute autre matière conductrice d'électricité, ou plus généralement d'un type compatible le dispositif d'extraction considéré.

Un tel effet permet p.ex. d'exclure l'utilisation d'autres types de capsules, notamment celles fabriquées avec un matériau biodégradable ou ne remplissant pas les caractéristiques de compatibilité avec le dispositif d'extraction. Inversement, l'invention permet d'exclure l'utilisation de capsules conductrices.

L'invention concerne également un dispositif pour la préparation d'une boisson extraite à partir d'une capsule comprenant un support de capsule et une cage à capsule à l'intérieur de laquelle sont disposés au moins une entrée d'eau et des moyens de perçage de capsule, caractérisé par le fait que ladite cage est dimensionnée de manière à déformer au moins partiellement toute capsule constituée d'un matériau déformable au contact d'eau chaude qui est disposée dans la cage, de manière à ce que la capsule soit retenue dans la cage consécutivement à son contact avec de l'eau chaude.

Selon un mode de réalisation de l'invention la paroi interne de la cage comprend un évidement dans lequel est logé un élément déformable dont le coefficient de rigidité est supérieur au coefficient de rigidité du matériau constituant la capsule.

L'évidement peut avoir la forme d'une gorge annulaire, d'un ou plusieurs trous.

Selon un autre mode de réalisation de l'invention la paroi interne de la cage comporte des éléments pivotants de type palette qui sont adaptés de manière à être intégralement logés dans la paroi de la cage si le coefficient de rigidité de la capsule est supérieur à une valeur déterminée et à émerger au moins partiellement de ladite paroi dans le cas contraire.

Selon un autre mode de réalisation de l'invention la paroi interne de la cage comprend un relief de type harpon.

Enfin, la paroi interne de la cage peut se présenter sous la forme d'une cloche (et possède un volume interne supérieur au volume des capsules.

La présente invention permet également d'améliorer la qualité du café extrait à partir des dispositifs précités.

A cet effet, elle concerne un dispositif pour la préparation d'une boisson extraite à partir d'une capsule comprenant un support de capsule et une cage à capsule, au moins une entrée d'eau, des moyens de perçage de capsule et une sortie de boisson,
dispositif caractérisé par le fait qu'il comporte des moyens de chauffage disposés de manière à chauffer le contenu d'une capsule insérée dans le dispositif.

Selon une variante de l'invention les moyens de chauffage sont disposés de manière à chauffer le support de capsule. Toute forme de chauffage adaptée au chauffage du contenu de la capsule peut être envisagée (rayonnement, conduction, convection, etc...).

Alternativement ou en outre, les moyens de chauffage sont disposés de manière à chauffer la cage à capsule.

Selon un mode de réalisation de l'invention la cage à capsule est entourée d'un élément chauffant électrique , comme p.ex. une résistance.

En fait, il n'est pas nécessaire que la cage soit totalement entourée de l'élément chauffant. Cette variante offre cependant l'avantage de chauffer plus efficacement et de manière plus homogène le contenu de la capsule.

Alternativement, l'élément de chauffage électrique peut être remplacé par un élément chauffant du type échangeur de chaleur. Ce dernier pouvant se présenter sous la forme d'un tube spiralé à l'intérieur duquel circule un fluide chaud (gaz ou liquide).

Selon une variante, l'échangeur de chaleur est mis en communication (dérivation) avec le conduit d'entrée d'eau du dispositif. Ainsi, une partie de l'eau destinée à traverser la capsule est prélevée pour chauffer ladite capsule.

Selon un autre mode de réalisation de l'invention l'élément chauffant est disposé à l'intérieur des parois de la cage à capsule. Tout type d'élément chauffant peut être utilisé dans cette configuration (résistance électrique, échangeur de chaleur, etc...).

Il est également possible d'utiliser des moyens de chauffage du type électromagnétique (micro-ondes, induction, etc...).

Enfin, les moyens de chauffage ne sont pas nécessairement en contact direct avec la cage ou le support, ils peuvent être reliés à l'un et/ou l'autre de ces éléments au moyen d'un élément de conduction de la chaleur.

### Exposé détaillé de l'invention

L'invention est décrite plus en détail ci-après au moyen d'exemples non limitatifs illustrés par les figures suivantes :
Les figures 1 à 4 montrent un exemple de dispositif selon l'invention avec une capsule dont le coefficient de perçage est inférieur à Rₚ.
Les figures 5 à 8 montrent un exemple de dispositif selon l'invention avec une capsule dont le coefficient de perçage est supérieur à Rₚ.
Les figures 9 et 10 montrent une cage de capsule selon l'invention avec ressort .
Les figurent 11 à 14 montrent un percement latéral et par le haut.
Les figurent 15 et 16 montrent le percement latéral sur une partie de la longueur, en ne touchant pas la partie supérieure de la capsule.
Les figures 17 à 19 illustrent un exemple selon l'invention dans lequel la cage de capsule possède une géométrie qui a pour effet de déformer la capsule préalablement à son percement.
Les figures 20 et 21 illustrent un exemple de cage selon l'invention dont le logement a un volume inférieur à celui de la capsule à introduire, la réduction de volume se présentant sous la forme de chicanes latérales.
Les figures 22 et 23 illustrent un autre exemple de cage selon l'invention dont le logement a un volume inférieur à celui de la capsule à introduire, la réduction de volume se présentant sous la forme de bombages latéraux.

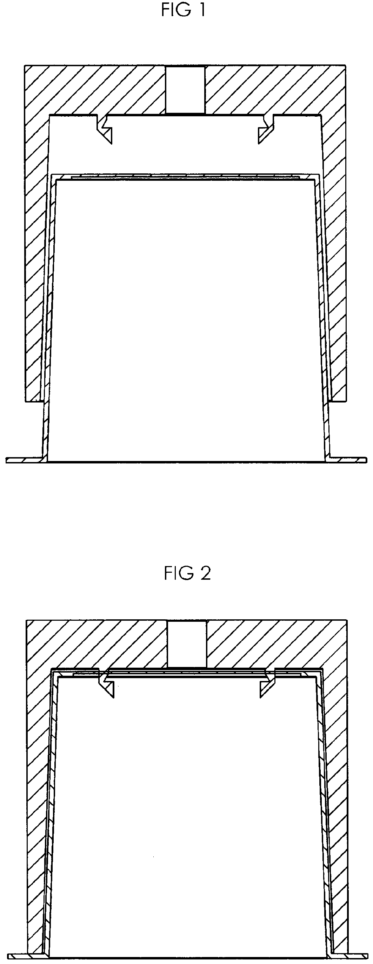

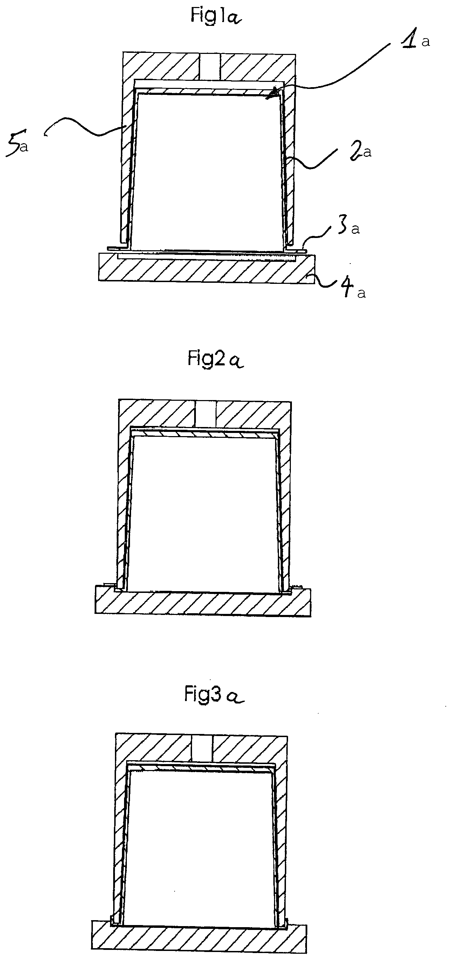

Les figures 1a à 3b montrent un exemple de dispositif selon l'invention dans lequel la collerette 3a de la capsule 1a est déformée sur un relief en forme d'évidement 6a disposé sur le support 4a.

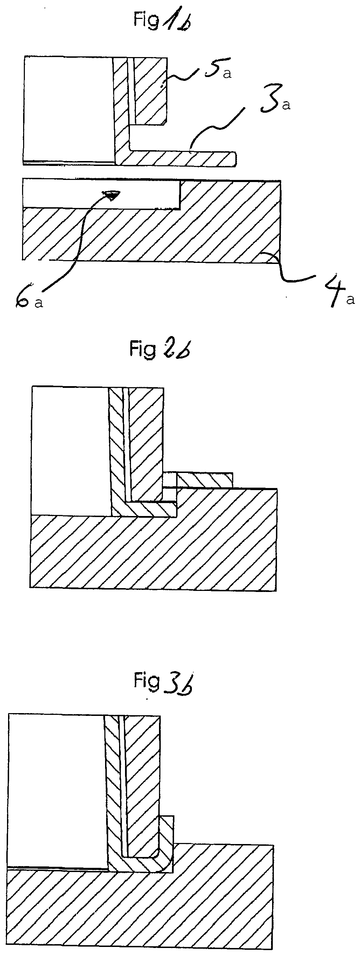

Les figures 1a et 1b illustrent la position d'une capsule 1a avant fermeture de l'ensemble support 4a - cage 5.

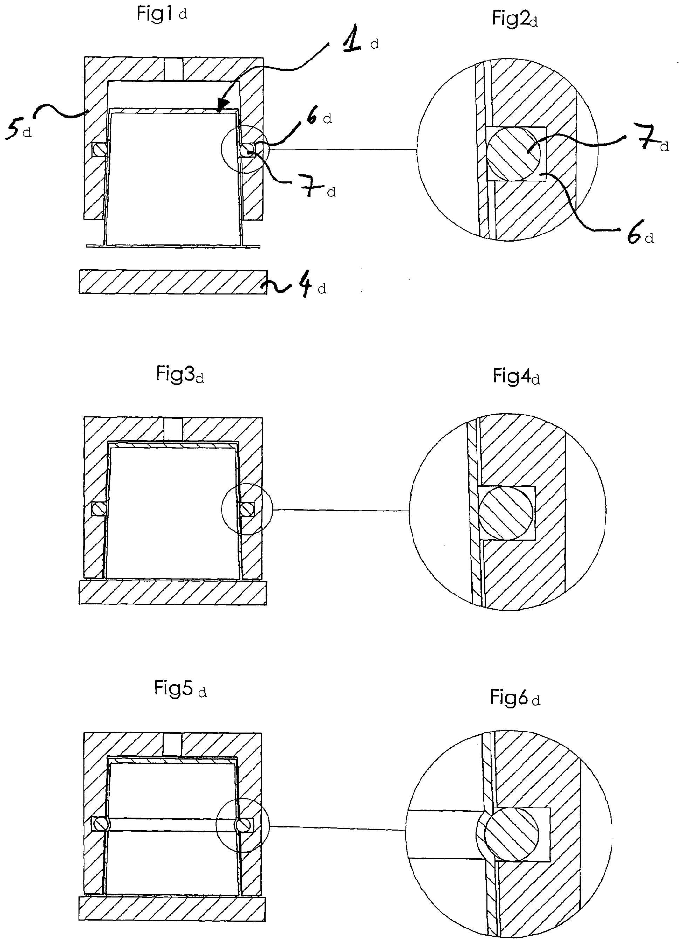

Les figures 2a et 2b illustrent un ensemble support 4a - cage 5 fermé comportant une capsule rigide.

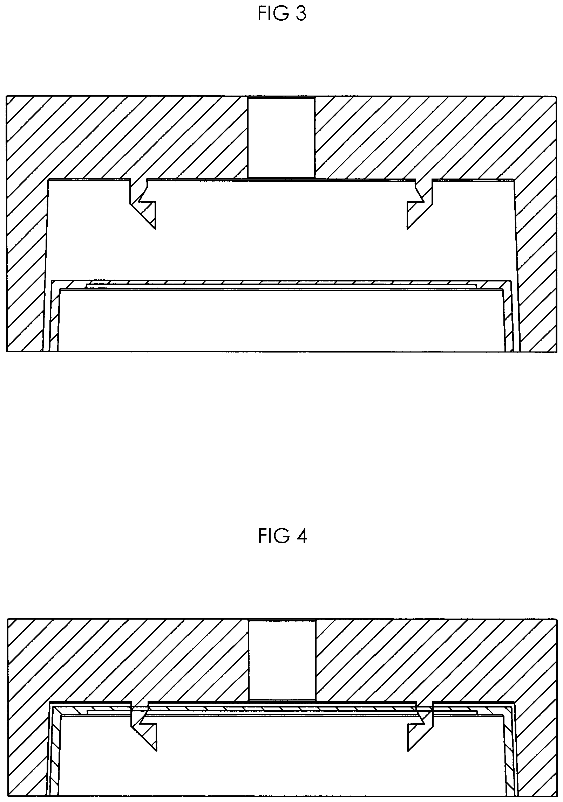

Les figures 3a et 3b illustrent un ensemble support 4a - cage 5 fermé comportant une capsule souple.
Comme on peut le constater sur la figure 2b, l'insertion d'une capsule rigide entraîne la cassure de la collerette 3a alors que l'insertion d'une capsule souple (voir figure 3b) a pour effet de déformer la collerette 3a vers le haut sans la casser. Dans ce deuxième cas, l'étanchéité au niveau de la collerette est donc préservée.

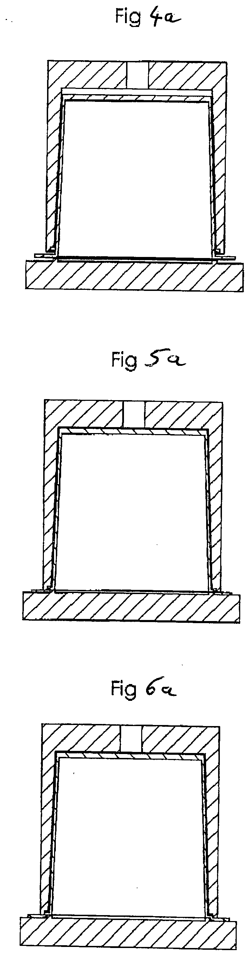

Les figures 4a à 6b montrent un exemple de dispositif selon l'invention dans lequel la collerette 3a de la capsule 1a est déformée sur un relief en forme de protubérance 7 disposée sur le support 4a.

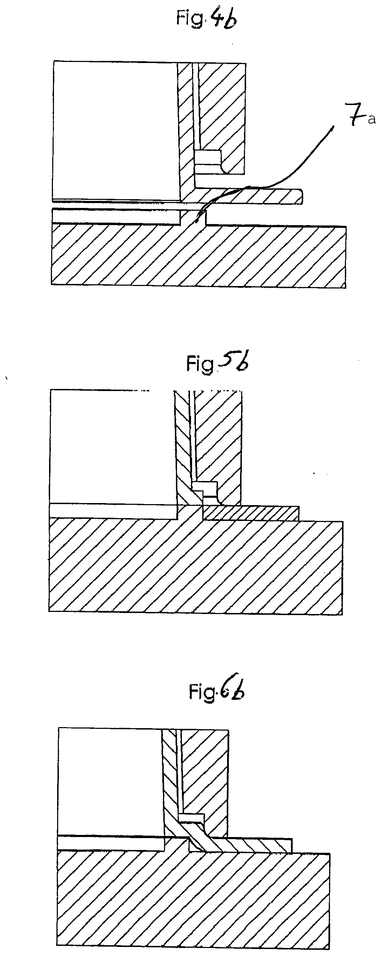

Les figures 4a et 4b illustrent la position d'une capsule 1a avant fermeture de l'ensemble support 4a - cage 5.

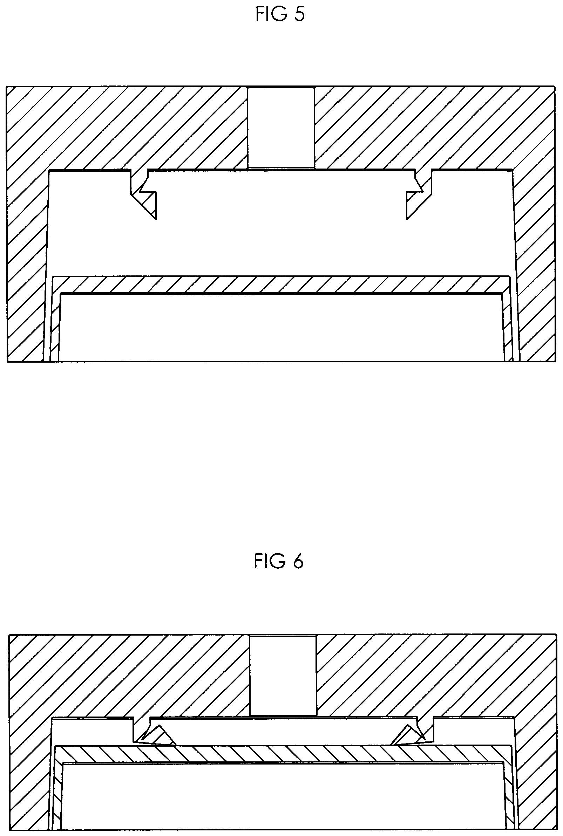

Les figures 5a et 5b illustrent un ensemble support 4a - cage 5 fermé comportant une capsule rigide.

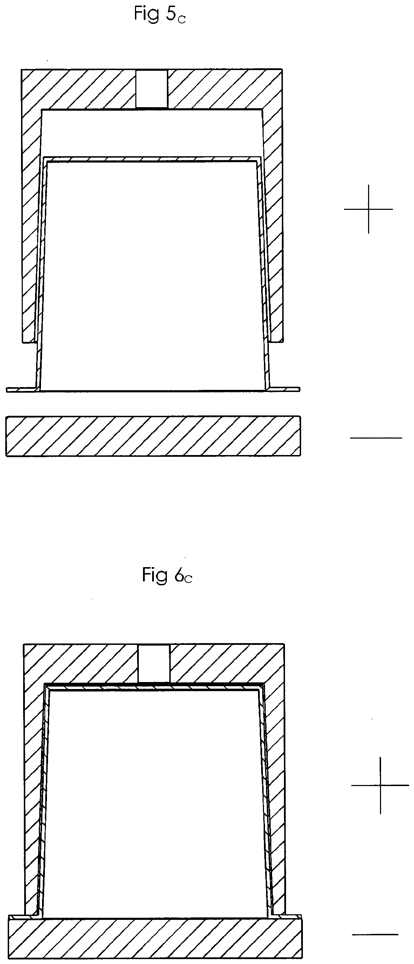

Les figures 6a et 6b illustrent un ensemble support 4a - cage 5 fermé comportant une capsule souple.
Comme on peut le constater sur la figure 4b, l'insertion d'une capsule rigide entraîne la cassure de la collerette 3a alors que l'insertion d'une capsule souple (voir figure 6b) a pour effet de déformer la collerette 3a vers le bas sans la casser. Dans ce deuxième cas, l'étanchéité au niveau de la collerette est donc préservée.

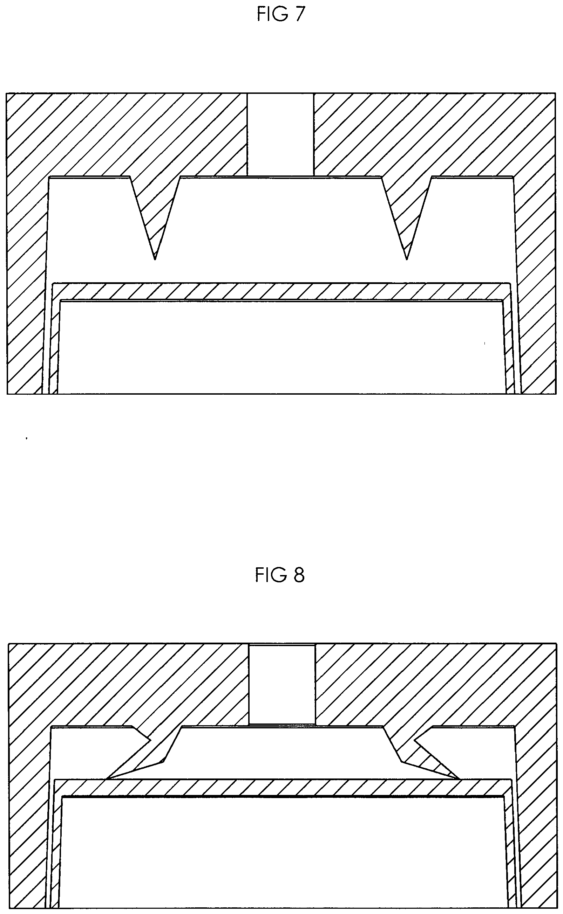

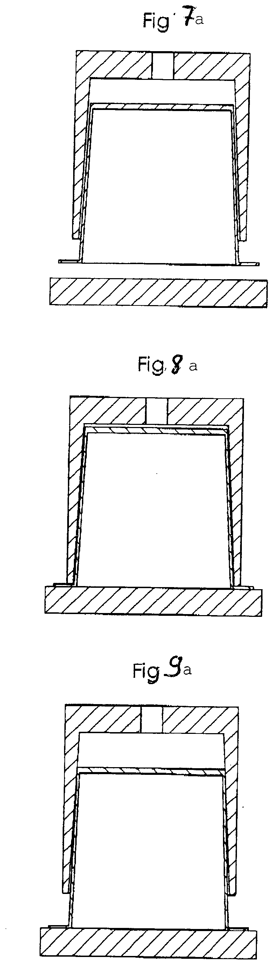

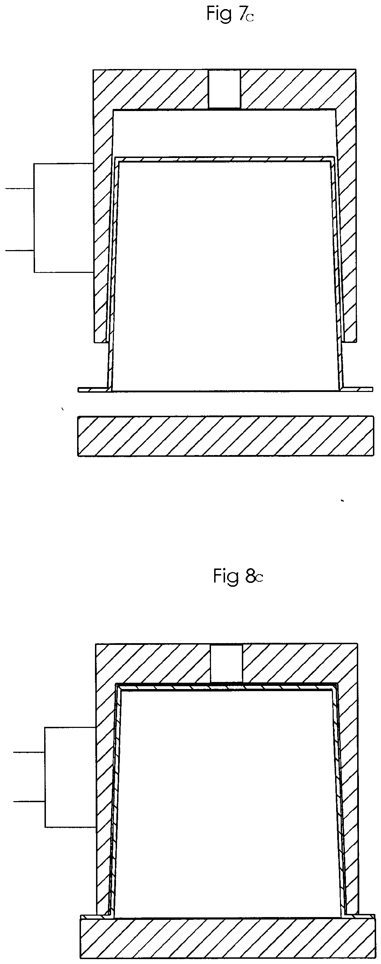

Les figures 7a à 9a illustrent une variante de l'invention dans laquelle l'inclinaison des parois latérales de la cage 5 est plus accentuée que l'inclinaison de la paroi latérale 2a de la capsule 1a.
La figure 7a présente la situation avant fermeture de l'ensemble support 4a - cage 5a.

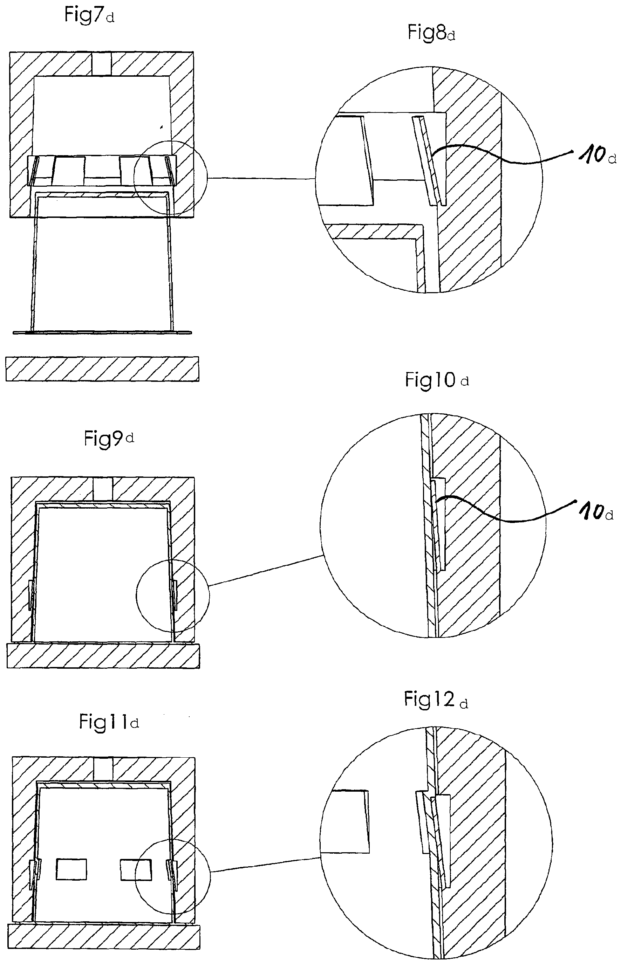

La figure 8a illustre une capsule souple qui s'est conformée au volume restreint de l'intérieur de la cage 5a.

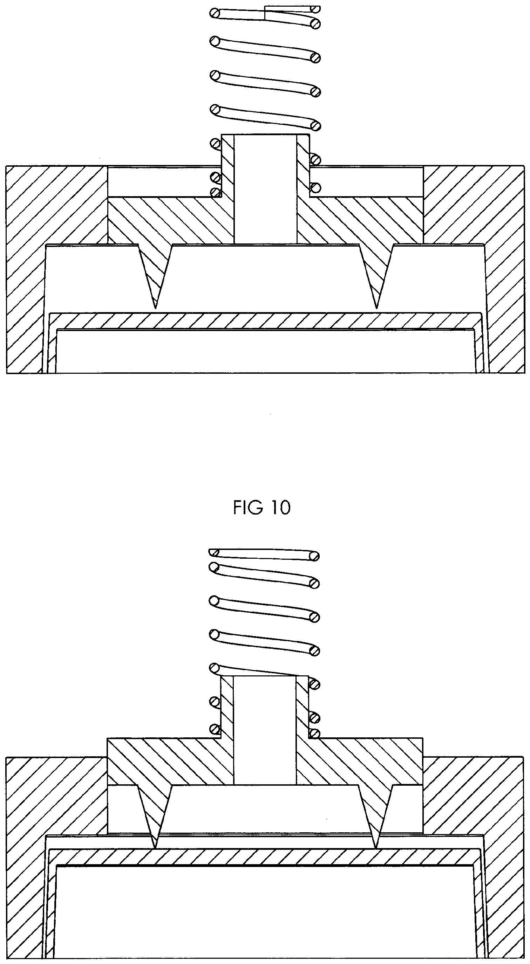

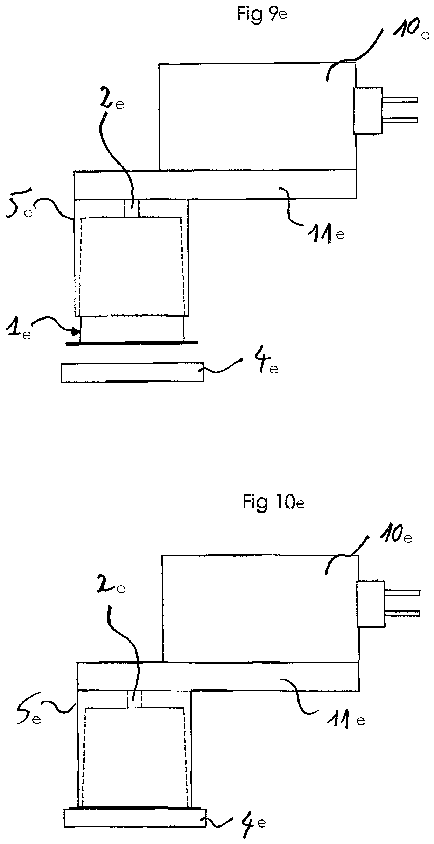

La figure 9 illustre une capsule rigide qui ne peut être introduite dans la cage 5a.
Forcer l'introduction d'une telle capsule dans la cage entraînerait sa cassure.

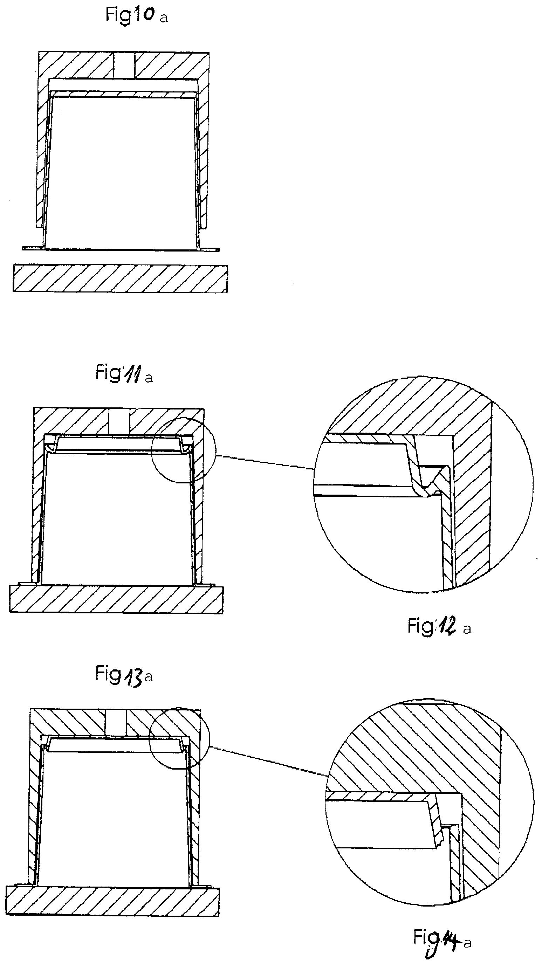

Les figures 10 à 14a montrent une cage de capsule de hauteur inférieur à la capsule.

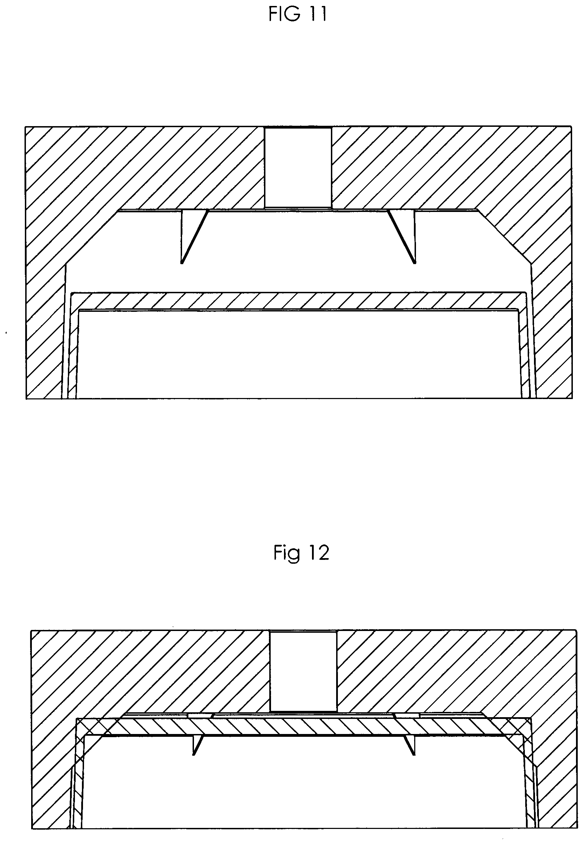

Les figures 11a et 12a illustrent l'utilisation d'une capsule souple qui, une fois introduite dans la cage 5a, se plie au niveau de sa partie supérieure.

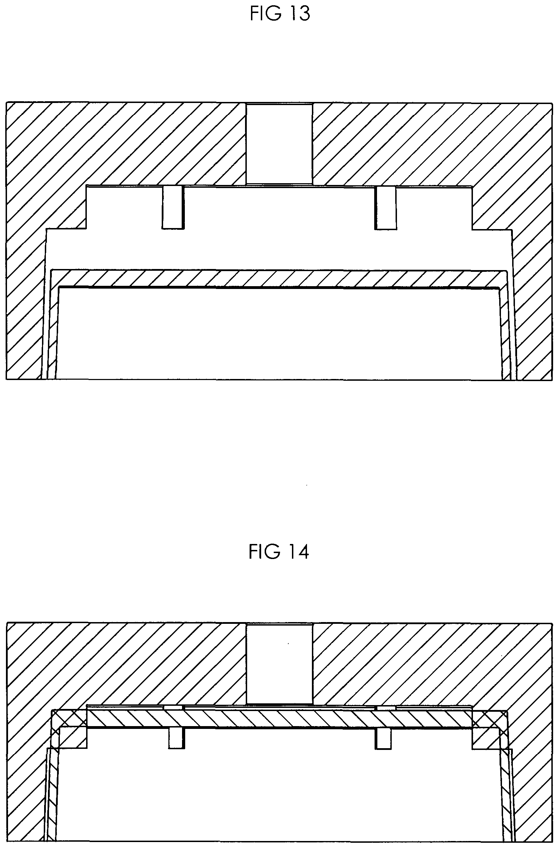

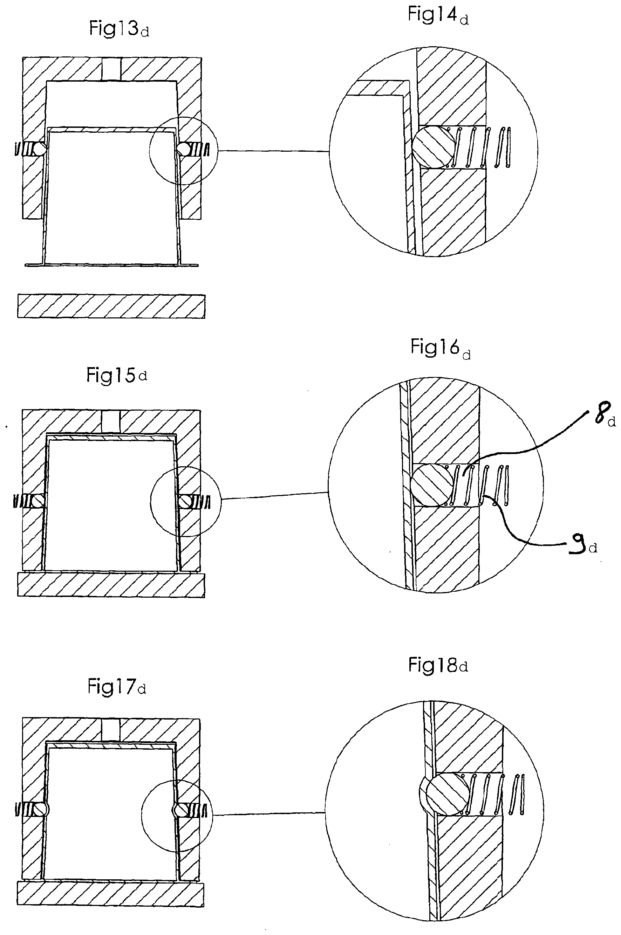

Les figures 13a et 14a illustrent l'utilisation d'une capsule rigide qui, une fois introduite dans la cage 5a, se casse au niveau de sa partie supérieure.

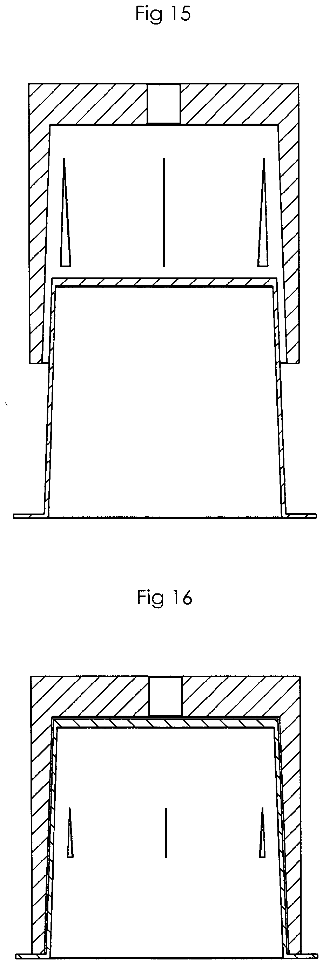

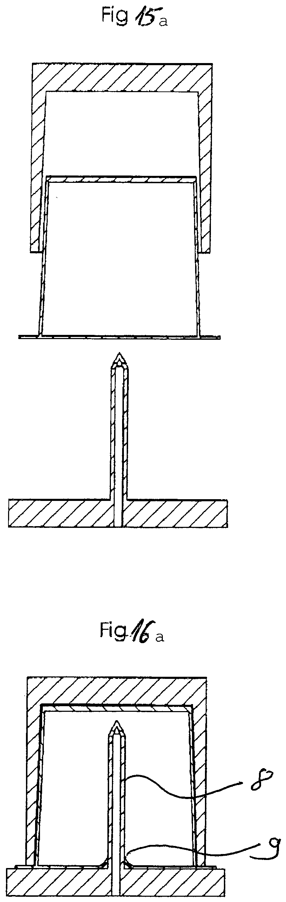

Enfin les figures 15a et 16a présentent une autre variante dans laquelle l'entrée d'eau se présente sous la forme d'une aiguille 8 dont la base 9a se situe sur le support 4a.
La figure 16a illustrent une utilisation d'une capsule souple. Sa partie inférieure, une fois percée par l'aiguille 8, se conforme à sa périphérie, assurant de la sorte une bonne étanchéité à cet endroit.

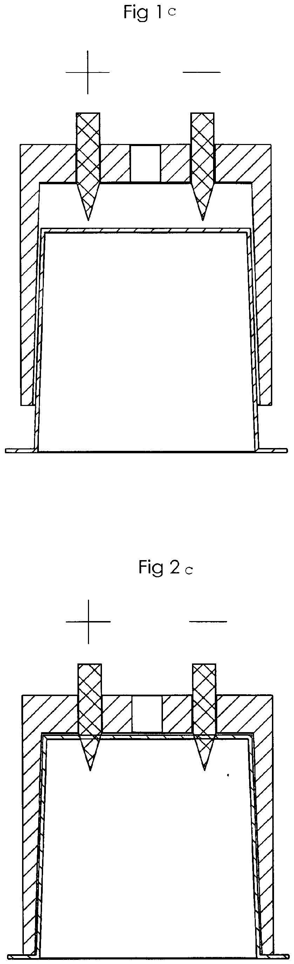

Les figures 1c à 4c illustrent le principe de mesure de la conductivité.
Les figures 5c à 8c décrivent une capsule en métal.

Les figures 1d à 6d montrent un exemple de dispositif selon l'invention dans lequel la paroi interne de la cage comporte un évidement en forme de gorge annulaire.

Les figures 7d à 12d présentent une cage avec un ou plusieurs évidements.

Les figures 13d à 18d présentent des variantes fonctionnant de manière similaire à celles des figures 1d à 6d.

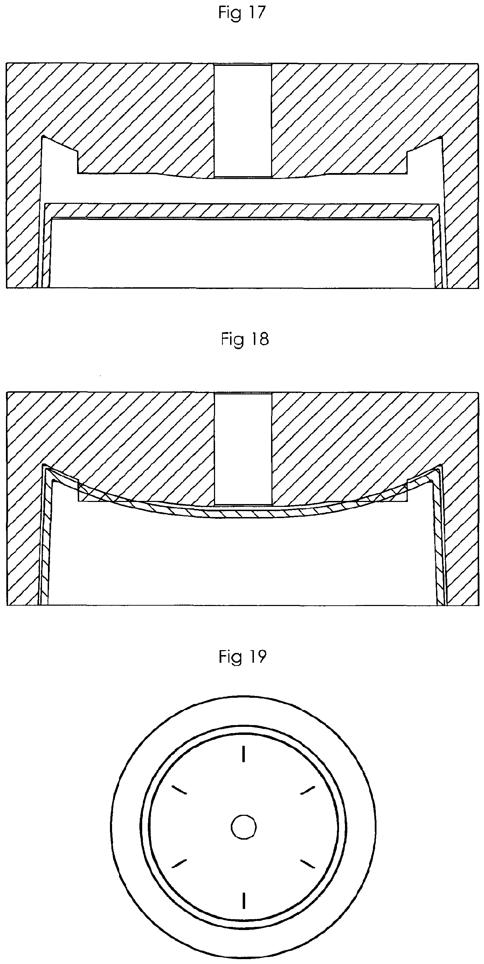

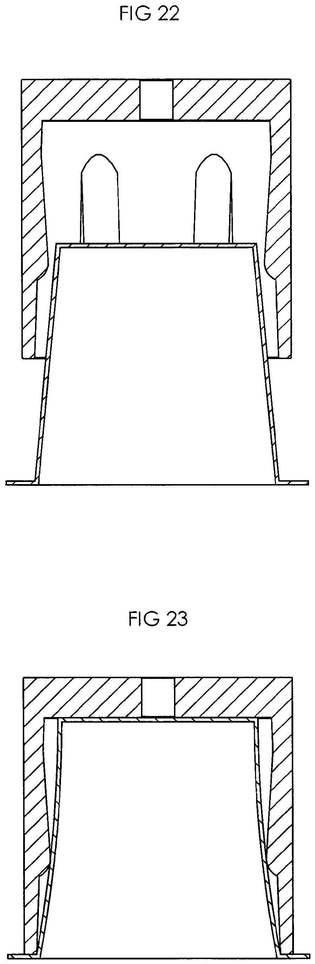

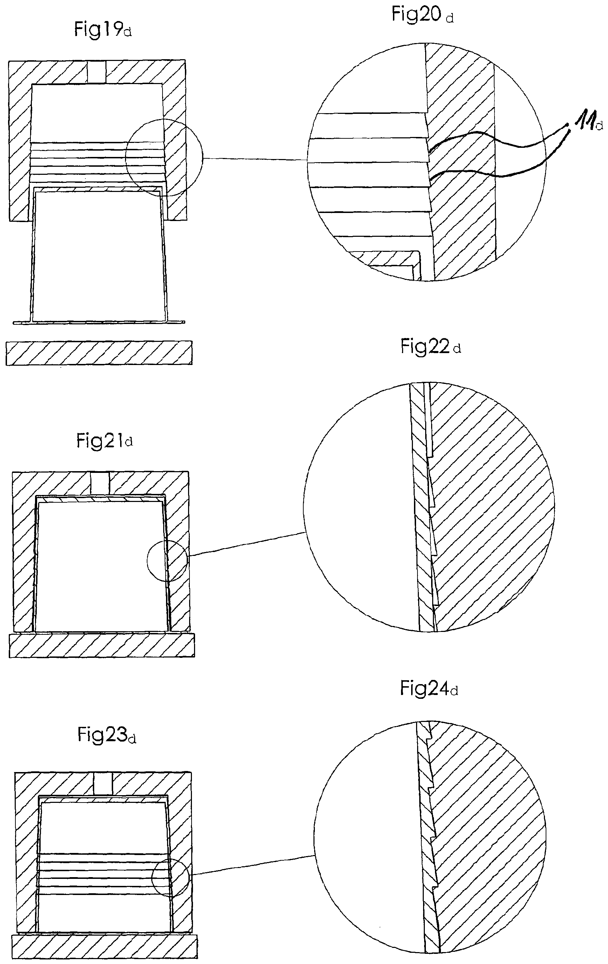

Les figures 19d à 24d illustrent une paroi interne de cage qui comporte un relief dentelé en forme de harpon.

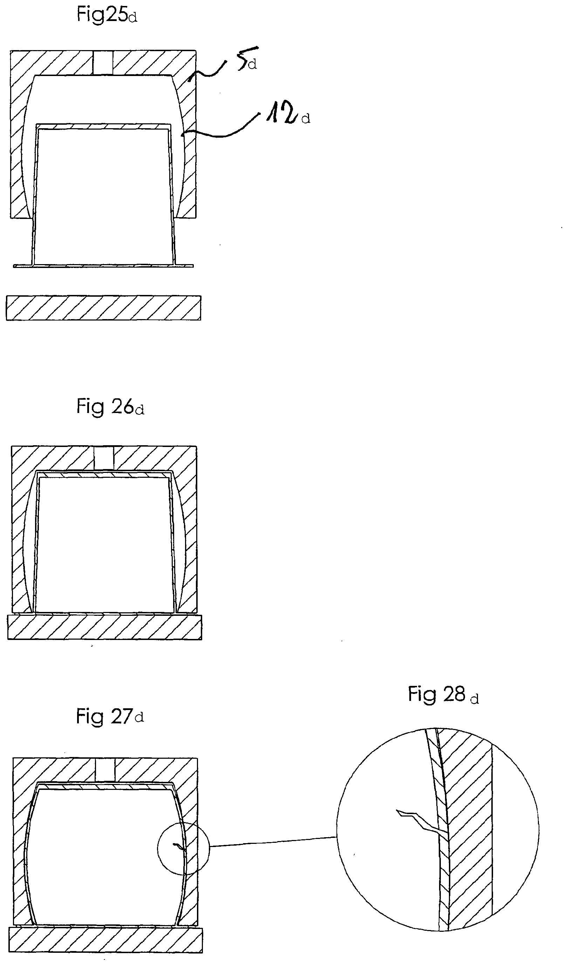

Les figures 25d à 28d présentent une cage en forme de cloche dont le volume interne est supérieur à celui des capsules.

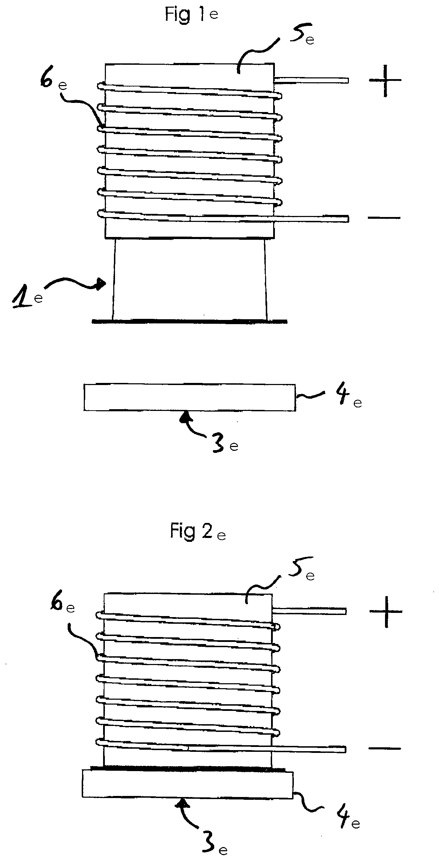

Les figures 1e et 2e illustrent un mode de réalisation dans lequel la cage à capsule est entourée d'un élément spiralé formant une résistance électrique.

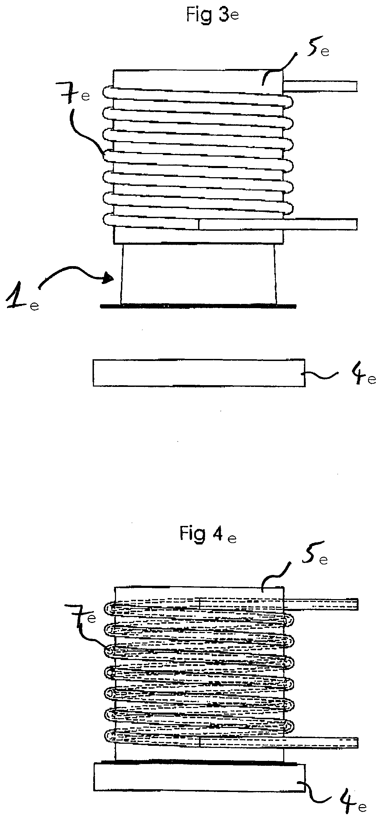

Les figures 3e et 4e sont similaires aux figures 1e et 2e mais diffèrent en ce que la résistance est remplacée par un échangeur de chaleur 7e en forme de tube spiralé à l'intérieur duquel circule un fluide caloporteur (gaz ou liquide).

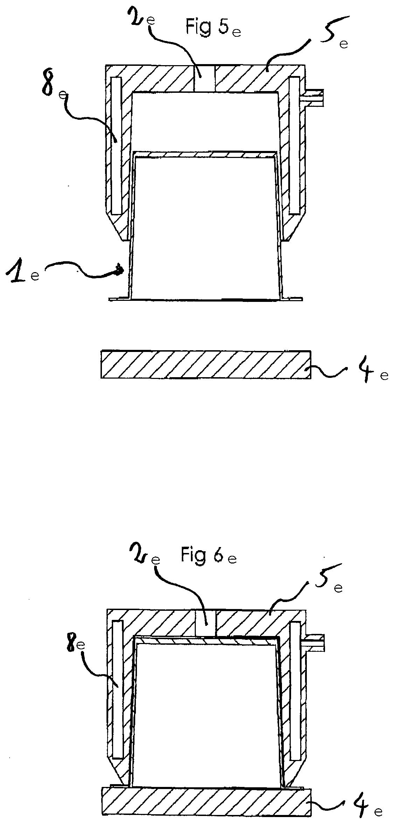

Les figures 5e et 6e représentent une autre variante avec échangeur de chaleur mais dans laquelle celui-ci est intégré dans la paroi de la cage à capsule.

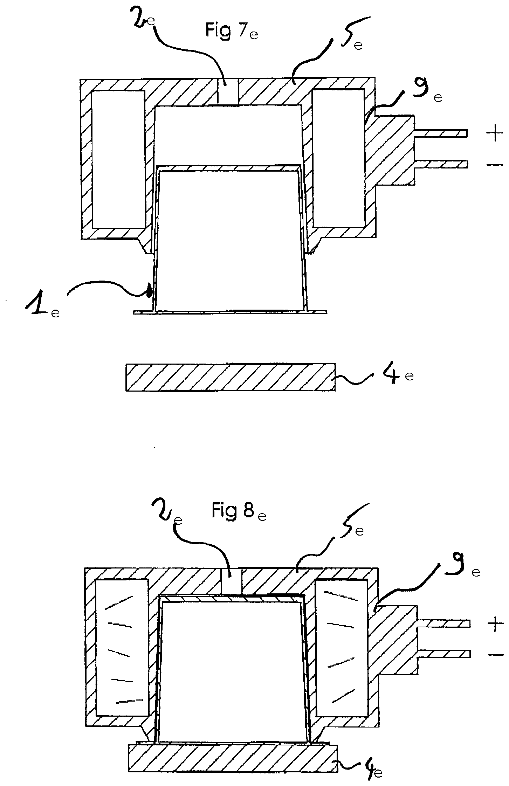

Les figures 7e et 8e illustrent une autre variante avec un chauffage du type électromagnétique, p.ex. micro-ondes.

Les figures 9e et 10e représentent une autre variante où les moyens de chauffage ne sont pas en contact direct avec la cage ou le support.

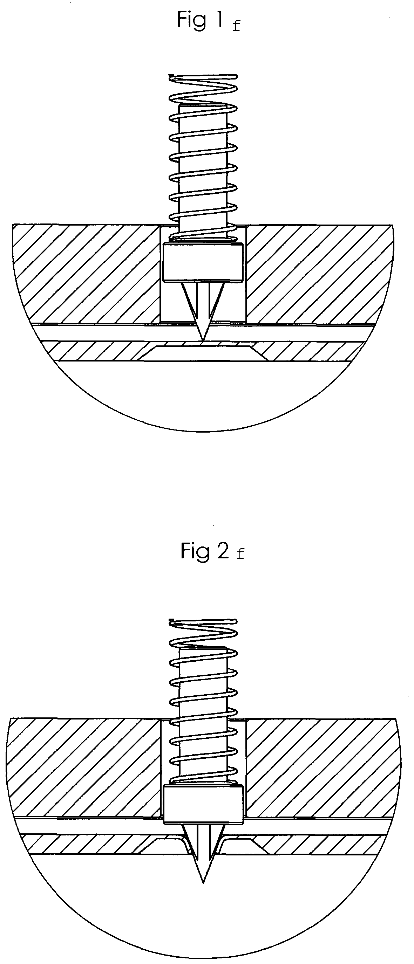

Les figures 1f et 2f présentent un mode de réalisation d'un dispositif selon l'invention dans lequel les moyens de perçage comprennent une aiguille montée sur un ressort, la tension de ce dernier étant ajustée de manière à ce que l'aiguille s'enfonce à travers la capsule lorsque celle-ci a atteint un certain degré de ramollissement. Ce mode de réalisation est bien entendu applicable uniquement à des capsules constituées d'une matière qui se ramollit lors de son contact avec de l'eau chaude.

La lamelle illustrée sur les figures 11 à 14 est adaptée pour percer principalement la paroi supérieure de la capsule. Elle peut cependant se prolonger vers le bas, jusqu'à mi-hauteur ou jusqu'au bord de la capsule.

De même, le percement illustré sur les figures 15 et 16 peut être réalisé sur tout le pourtour de la capsule.

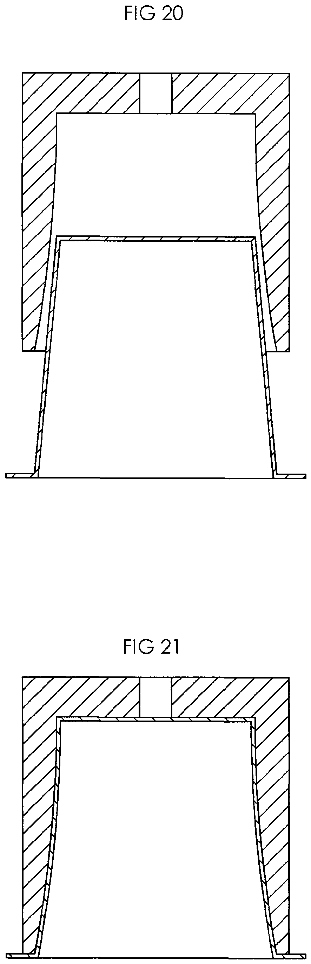

Les cages représentées sur les figures 20 à 23 n'autorisent donc que l'usage de capsule déformables, à savoir des capsules avec un faible coefficient de rigidité.

Inversement, l'usage d'une capsule rigide (non illustré) entraînerait des fuites, p.ex. de marc, à cet endroit.

Les dispositifs représentés sur les figures discutées précédemment n'autorisent donc que l'usage de capsule déformables, à savoir des capsules avec un faible coefficient de rigidité.

L'invention permet également de détecter si la capsule utilisée dans la cage à capsule est en métal ou toute autre matière conductrice d'électricité, ou plus généralement d'un type compatible le dispositif d'extraction considéré.

Un tel effet permet p.ex. d'exclure l'utilisation d'autres types de capsules, notamment celles fabriquées avec un matériau biodégradable ou ne remplissant pas les caractéristiques de compatibilité avec le dispositif d'extraction. Inversement, l'invention permet d'exclure l'utilisation de capsules conductrices.

Il y a deux façons principales de détecter un métal, par exemple de l'aluminium, l'une par conductivité, c'est-à-dire qu'un endroit de la capsule est touchée ou perforée par une pièce servant également de borne électrique. Une autre pièce pouvant également percer ou toucher la capsule à un autre endroit sert également de borne électrique. Si le courant passe entre les deux bornes avant l'injection de l'eau, la capsule est en métal. Ce qui empêche par exemple la mise en route de la pompe de la machine, donc empêche l'extraction.

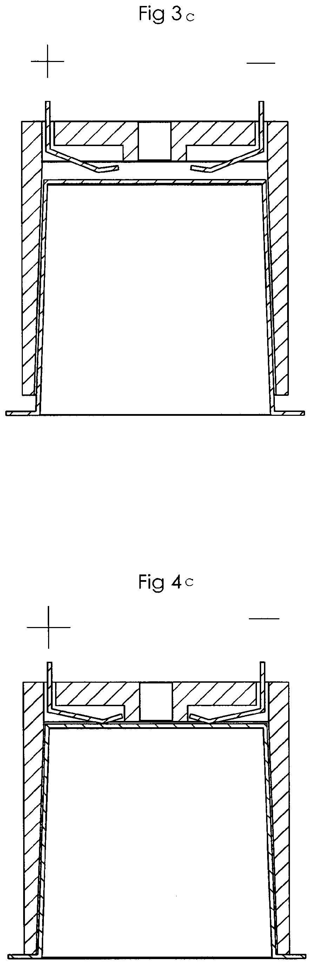

Les figures 1c à 4c illustrent ce principe, figures 1c et 2c avec des bornes qui percent la capsule, figures 3c et 4c avec des bornes qui viennent en contact avec la capsule. Bien entendu, ces figures ne sont qu'une illustration du principe et ne doivent pas être considérées comme limitatives. En effet, les bornes peuvent être placées ailleurs que vers le fond de la capsule.

De même, l'autre façon est d'avoir un élément détecteur de métal par changement des propriétés électriques ou physiques par exemple ou magnétisme ou tout autre procédé de détection valable pour les métaux non ferreux, détectant, à travers la paroi de la cage par exemple ou en contact direct à un endroit quelconque avec la capsule, si celle-ci est en métal (figure 5c à 8c).

En fait tout moyen conducteur placé au contact avec la capsule peut être utilisé pour contrôler que la capsule est d'un type compatible (p.ex. conducteur) et empêcher le fonctionnement de la machine si la capsule détectée n'est pas d'un type compatible.

Outre la conduction électrique, on peut par exemple mesurer la résistance électrique, des effets magnétiques etc.

On peut également utiliser la capsule pour fermer un circuit, par exemple si la cage est en deux (ou plusieurs) parties isolées électriquement entre elles. L'utilisation d'une capsule conductrice électriquement peut alors se détecter facilement, le contact entre les différents éléments isolés étant réalisé par ladite capsule.

On peut également envisager d'autres moyens de détection équivalents qui permettraient de reconnaître les capsules compatibles, par exemple: la conduction thermique, des propriétés optiques etc... tous ces moyens servant en fait à différencier les capsules qui peuvent être utilisées avec le dispositif d'extraction considéré, de celles qui ne le peuvent pas et ne doivent pas permettre un fonctionnement correct du dispositif d'extraction.

Bien entendu, plusieurs moyens de détection différents peuvent être combinés dans le même dispositif d'extraction.

Les figures 1d à 6d montrent un exemple de dispositif selon l'invention dans lequel la paroi interne de la cage 5d comporte un évidement 6d en forme de gorge annulaire, l'intérieur de l'évidement 6d étant occupé par un élément légèrement déformable 7d, p.ex. un O-ring ou un ressort, qui en se laissant un peu comprimer, autorise l'insertion d'une capsule rigide dans la cage 5d, cela sans que la capsule 1d se déforme. Si la capsule 1d se ramollit consécutivement à sa mise en contact avec de l'eau chaude (voir figures 5d et 6d), la paroi latérale de la capsule 1d est déformée au niveau de l'évidement 6d. Une fois l'eau chaude évacuée, la capsule 1d se rigidifie et reste bloquée dans la cage 5d, rendant de la sorte le dispositif inopérant.
Il convient de relever que l'élément légèrement déformable 7d doit être adapté de manière à exercer une certaine force en direction du centre de la cage 5d.

La variante illustrée sur les figures 13d à 18d fonctionne de manière similaire à celle des figures 1d à 6d Elle diffère seulement par le fait que l'évidement se présente sous forme d'au moins un trou cylindrique 8d dans lequel est disposé un ressort 9d.
De préférence, on utilise plusieurs trous 8 répartis autour de la capsule 1d.

La variante présentée sur les figures 7d à 12d présente également une cage 5d avec un ou plusieurs évidements. Dans ce cas par contre, l'élément déformant a la forme d'une palette 10d pivotant autour d'un axe horizontal. Lorsque la capsule 1d est insérée dans la cage, la palette 10d est logée intégralement dans son évidement. Une fois la capsule 1d ramollie, chaque palette 10d s'incruste dans la paroi de la capsule 1d. La géométrie des palettes 10d a pour effet d'induire un effet harpon. Comme on peut le voir sur les figures 11d et 12d, la capsule 1d est retenue dans la cage 5d.

La variante des figures 19d à 24d se caractérise par une paroi interne de cage 5d qui comporte un relief dentelé en forme de harpon 7d. Lorsque la capsule 1d se ramollit, une partie de sa matière se loge entre les dents de la cage 5d, retenant de la sorte la capsule 1d dans la cage 5d.

Enfin, la variante des figures 25d à 28d présente une cage 5d en forme de cloche dont le volume interne est supérieur à celui des capsules. Lors de l'entrée d'eau chaude dans une capsule déformable à son contact, la déformation est telle qu'un éclatement de sa paroi latérale peut se produire (voir figures 27d et 28d). La capsule est donc inutilisable. En outre, une fois l'eau chaude évacuée, la capsule 1d est bloquée dans la cage 5d.

Les figures 1e et 2e illustrent un mode de réalisation dans lequel la cage à capsule 5e est entourée d'un élément spiralé formant une résistance électrique 6e.
La figure 1e représente le dispositif ouvert et la figure 2e le dispositif fermé (mode de fonctionnement).
Les figures 3e et 4e sont similaires aux figures 1e et 2e mais diffèrent en ce que la résistance est remplacée par un échangeur de chaleur 7e en forme de tube spiralé à l'intérieur duquel circule un fluide caloporteur (gaz ou liquide).
Selon une variante non illustrée, l'échangeur de chaleur est en communication, via une dérivation, avec le conduit d'entrée d'eau du dispositif.

Les figures 5e et 6e représentent une autre variante avec échangeur de chaleur mais dans laquelle celui-ci 8e est intégré dans la paroi de la cage à capsule 5e.

Les figures 7e et 8e illustrent une autre variante avec un chauffage du type électromagnétique 9e, p.ex. micro-ondes.

Les figures 9e et 10e représentent une autre variante où les moyens de chauffage 10 ne sont pas en contact direct avec la cage 5e ou le support 4e mais par le biais d'un élément de conduction de chaleur 11e, en métal p.ex. mais il peut s'agir également d'un réservoir contenant du liquide.

On relèvera en particulier que les moyens de chauffage ne sont pas nécessairement adaptés pour chauffer la cage et ou le support de capsule, préalablement au chauffage du contenu de la capsule.

## Revendications

1. Dispositif pour la préparation d'une boisson extraite à partir d'une capsule comprenant un support de capsule et une cage à capsule à l'intérieur de laquelle sont disposés au moins une entrée d'eau et des moyens de perçage de capsule, **caractérisé par le fait que** les moyens de perçage sont adaptés pour percer uniquement des capsules dont le coefficient de résistance au perçage est inférieur à une valeur Rₚ, ce coefficient étant choisi de manière à autoriser le percement de capsules réalisées en matériau biodégradable.

2. Dispositif selon la revendication 1 dans lequel les moyens de perçage sont adaptés de manière à se casser lorsqu'ils interagissent avec une capsule dont le coefficient de résistance au perçage est supérieur à une valeur Rₚ.

3. Dispositif selon la revendication 1 dans lequel les moyens de perçage sont adaptés de manière à se plier lorsqu'ils interagissent avec une capsule dont le coefficient de résistance au perçage est supérieur à une valeur Rₚ.

4. Dispositif selon la revendication 1 dans lequel les moyens de perçage sont adaptés de manière à se rétracter lorsqu'ils interagissent avec une capsule dont le coefficient de résistance au perçage est supérieur à une valeur Rₚ.

5. Dispositif selon la revendication 1 dans lequel les moyens de perçage sont adaptés de manière à déformer la capsule préalablement à son perçage.

6. Dispositif selon la revendication 1 dans lequel les moyens de perçage comprennent une aiguille montée sur un ressort, la tension de ce dernier étant ajustée de manière à ce que l'aiguille s'enfonce à travers la capsule lorsque celle-ci a atteint un certain degré de ramollissement.

## Patentansprüche

1. Vorrichtung für die Zubereitung eines aus einer Kapsel extrahierten Getränks, umfassend einen Kapselhalter und einen Kapselkäfig, in dem mindestens ein Wassereinlass und Kapseldurchstechmittel angeordnet sind, **dadurch gekennzeichnet, dass** die Durchstechmittel ausgebildet sind, um nur Kapseln zu durchstechen, deren Widerstandskoeffizient gegenüber Durchstechen kleiner als ein Wert Rp ist, wobei dieser Koeffizient derart ausgewählt ist, dass das Durchstechen von Kapseln erlaubt ist, die aus biologisch abbaubarem Material hergestellt sind.

2. Vorrichtung nach Anspruch 1, wobei die Durchstechmittel derart ausgebildet sind, dass sie zerbrechen, wenn sie mit einer Kapsel interagieren, deren Widerstandskoeffizient gegenüber Durchstechen größer als ein Wert Rₚ ist.

3. Vorrichtung nach Anspruch 1, wobei die Durchstechmittel derart ausgebildet sind, dass sie sich falten, wenn sie mit einer Kapsel interagieren, deren Widerstandskoeffizient gegenüber Durchstechen größer als ein Wert Rₚ ist.

4. Vorrichtung nach Anspruch 1, wobei die Durchstechmittel derart ausgebildet sind, dass sie sich zurückziehen, wenn sie mit einer Kapsel interagieren, deren Widerstandskoeffizient gegenüber Durchstechen größer als ein Wert Rₚ ist.

5. Vorrichtung nach Anspruch 1, wobei die Durchstechmittel derart ausgebildet sind, dass sie die Kapsel vor ihrem Durchstechen verformen.

6. Vorrichtung nach Anspruch 1, wobei die Durchstechmittel eine Nadel umfassen, die auf einer Feder angebracht ist, wobei die Spannung letzterer derart eingestellt ist, dass die Nadel durch die Kapsel dringt, sobald diese einen bestimmten Erweichungsgrad erreicht hat.

## Claims

1. A device for preparing a beverage extracted from a capsule, comprising a capsule holder and a capsule cage inside which are positioned at least one water intake and means for piercing the capsule, **characterized in that** the piercing means are suitable for piercing only capsules whose resistance coefficient to piercing is below a value Rₚ, this coefficient being chosen so as to allow the piercing of capsules made from a biodegradable material.

2. The device according to claim 1, wherein the piercing means are suitable for breaking when they interact with a capsule whose resistance coefficient to piercing is above a value Rₚ.

3. The device according to claim 1, wherein the piercing means are suitable for bending when they interact with a capsule whose resistance coefficient to piercing is above a value Rₚ.

4. The device according to claim 1, wherein the piercing means are suitable for retracting when they interact with a capsule whose resistance coefficient to piercing is above a value Rₚ.

5. The device according to claim 1, wherein the piercing means are suitable for deforming the capsule before it is pierced.

6. The device according to claim 1, wherein the piercing means comprise a needle mounted on a spring, the tension of the latter being adjusted such that the needle pushes through the capsule when the latter has reached a certain degree of softening.
